# EUROPEAN PATENT APPLICATION

(11) **EP 3 910 218 A1**
(43) Date of publication of application: **17.11.2021**
(21) Application number: 21172350.7
(22) Date of filing: 05.05.2021
(51) Int. Cl.: F16K 31/06

(54) **SOLENOID VALVE, AND PUMP UNIT WITH SUCH A SOLENOID VALVE**

(30) Priority: 11.05.2020 DE 102020112636
(71) Applicant: FTE automotive GmbH, 96106 Ebern (DE)
(72) Inventor: LEHNERT, Alexander, D-96106 Ebern (DE); SPERBER, Christian, D-96106 Ebern (DE); WÜCHNER, Benjamin, D-96106 Ebern (DE); GEGNER, Patrick, D-96106 Ebern (DE)
(74) Representative: Valeo Powertrain Systems

(57) **Abstract**

Solenoid valve (4) with a coil (30), with an armature (32), with a valve seat (38), and with a valve element (36) which can be forced against the valve seat (38) by the armature (32), wherein provision is made of a hydraulic damper (50) which is active only in a stroke range of the armature (35) with an almost closed valve element (36).

## Description

The invention relates to a solenoid valve with a coil, with an armature, with a valve seat, and with a valve element which can be forced against the valve seat by the armature. The invention furthermore relates to a pump unit for providing a hydraulic pressure for operating an actuator in the drivetrain of a motor vehicle, in particular an actuator for operating a clutch or a transmission, with a pump, with a reservoir for hydraulic fluid, and with at least one such solenoid valve.

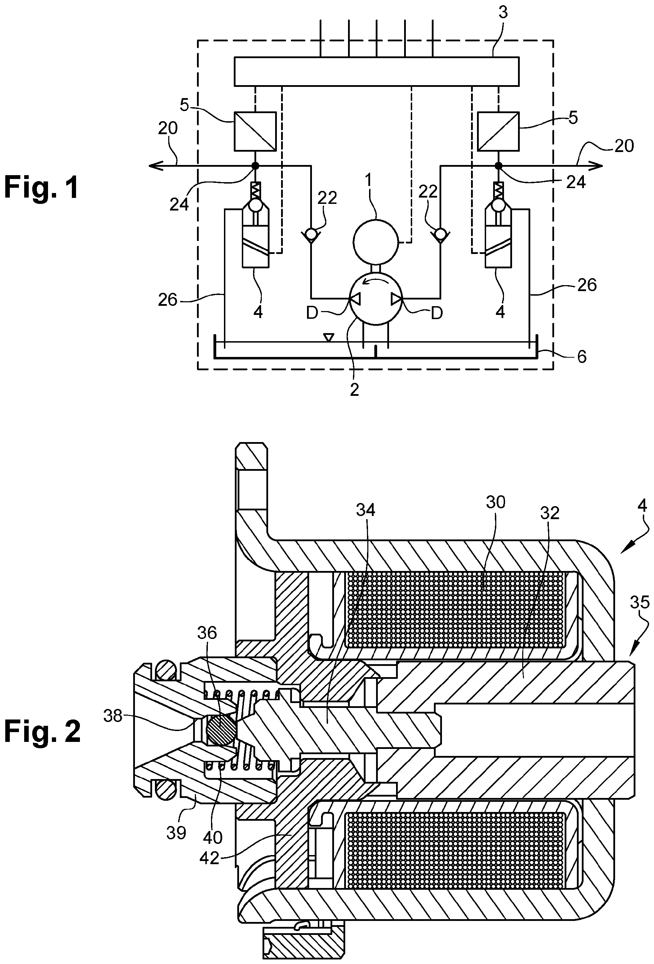

Such a pump assembly will be described schematically below on the basis of Figure 1. The solenoid valves used therein will be explained by way of example on the basis of Figure 2.

The pump assembly has, as main constituent parts, a drive motor 1, a pump 2, a set of control electronics 3, two solenoid valves 4, two pressure sensors 5, which are accommodated in a common housing, and a reservoir 6.

By contrast to the embodiment shown here with two solenoid valves, it is also possible for a greater number of solenoid valves to be used. It is basically also possible for only a single solenoid valve to be used.

The electric motor 1 may be a brushless electric motor with which the pump 2 is driven.

The pump 2 may be designed as a rotary slide pump, in particular as a roller cell pump.

The pump 2 draws fluid in from the reservoir 6 and has two mutually independent pressure outlets D, each of which is provided for providing a supply to the corresponding one of two mutually independent pressure outlets 20 of the pump assembly.

A check valve 22 is arranged downstream of each pressure outlet D of the pump 2. The inlet 24 of the solenoid valve 4 is situated in each case downstream of the outlet of the check valves 22. In a manner dependent on the setpoint pressure and on the actual pressure measured at the pressure sensor 5, each of the solenoid valves 4 is actuated such that the desired hydraulic pressure prevails at the pressure outlet 20 of the pump assembly. Excess hydraulic fluid is conducted back directly into the reservoir 6 through a return line 26.

The solenoid valves 4 are designed as proportional valves. Each one has a coil 30, in the interior space of which an armature part 32 is movably arranged. The armature part 32 acts via a plunger 34 on a valve element 36 which can interact with a valve seat 38. The valve seat 38 is formed in a bushing 39 which, on the side facing towards the plunger 34, serves as a guide for the valve element 36.

The plunger is forced by a restoring spring 40 into an open position in which it is spaced apart from the valve seat 38.

The plunger 34 is fastened to the armature part 32, whereby they move together. For the sake of simplicity, the armature part 32 and the plunger 34 are also referred to here jointly as armature 35.

Here, a bearing bracket 42 or yoke composed of ferromagnetic material is arranged on that side of the coil 30 which faces towards the valve seat 38. An air gap is present between the bearing bracket 42 and the armature 35 when the armature 35 is situated in the open position shown in figure 2. Said air gap is at least as large as the stroke performed by the armature 35 during the closing of the valve.

Through suitable actuation of the solenoid valves 4, the pressure at the pressure outlets 20 can be controlled or regulated such that the two clutches of a dual-clutch transmission, for example, are activated. In this case, the two clutches are activated in particular such that the torque provided by a drive motor can be transmitted from one gear stage to another without interruption of the traction force. For this purpose, one clutch is opened, while the other clutch is simultaneously closed.

In order for it to be possible for the torque to be transmitted from one clutch to the other with short reaction times, the presently open clutch must be brought as quickly as possible to the point at which the torque transmission begins ("kiss point"). Then, the further closure of the clutch must be controlled as precisely as possible. Solenoid valves with short reaction times are required for this purpose.

However, in the case of solenoid valves with short reaction times, it has been found that vibrations can occur during the closure of the valve element. This is disadvantageous with regard to regulation accuracy.

It is the object of the invention to provide a solenoid valve in which vibrations are prevented without this adversely affecting the reaction time.

To achieve this object, in the case of a solenoid valve of the type mentioned in the introduction, provision is made of a hydraulic damper which is active only in a stroke range of the armature with an almost closed valve element. The invention is based on the realization that the vibrations of the valve element can be avoided if the movement of the armature is damped in the range of the stroke thereof that corresponds to an almost or completely closed valve element. Since the armature is not damped in the remaining movement range, which corresponds to most of the maximum stroke, short reaction times are still maintained. This makes it possible for a clutch to be brought to the "kiss point", that is to say for the pressure of the order of approximately 5 bar required therefor to be built up, in a very short time with the solenoid valve, while subsequently the solenoid valve can be regulated in a very precise and damped manner such that the hydraulic pressure of the order of up to 40 bar required until complete closure of the clutch is built up.

The hydraulic damper preferably has a damping chamber and a piston which are moved relative to one another when the armature is displaced. In this case, the hydraulic fluid, which is built up by the solenoid valve, is situated in the damping chamber, with the result that no separate supply of a hydraulic fluid to the hydraulic damper is required.

According to one configuration of the invention, it may be provided that an overflow gap is provided between the piston and the wall of the damping chamber and has a width of the order of 0.05 to 0.1 millimetre. The hydraulic damper consequently has a very simple structure without separate throttles or even damping valves, the damping action rather being produced solely by the flow resistance which the gap between the piston and the wall of the damping chamber sets against the fluid which is displaced from the damping chamber when the piston enters the latter.

According to one embodiment of the invention, it is provided that the damping chamber is arranged on the armature and the piston is arranged so as to be fixed. In this configuration, no additional components are required to form the damping chamber.

The damping chamber may in particular be an annular groove on the armature that is provided on a face side of the armature. This results in a highly compact configuration.

The piston may be in the form of an annular piston on a bushing on which the valve seat is also arranged. This results in a minimization of the tolerance chains; the damping chamber is formed on the component which acts directly on the valve element, and the piston is formed on the component on which the valve seat is also arranged.

In this embodiment, there is sufficient space in the region of the bushing for a restoring spring which is active between the armature and the bushing.

According to an alternative embodiment, it is provided that the damping chamber is arranged so as to be fixed and the piston is arranged on the armature. In this embodiment, too, no separate components are required to form the damping chamber and the piston.

Here, the damping chamber is preferably formed in a bushing on which the valve seat is also arranged. This, too, prevents a build-up of tolerance chains.

Multiple throughflow channels are provided between the piston and the armature, so that, despite the piston, which interacts with the bushing, it is ensured that the hydraulic fluid can flow away when the solenoid valve is open.

With regard to the structural space available in the region of the bushing, it may be advantageous for the restoring spring in this embodiment to be active between the armature and a bearing bracket of the solenoid valve.

According to one embodiment, it is provided that the armature is formed in two parts with an armature part, which projects into the coil, and a plunger, which interacts with the valve element, wherein a part of the hydraulic damper is formed on the plunger. The formation of the armature in two parts may be advantageous with regard to different materials used for the armature part and for the plunger and also with regard to assembly ability.

The stroke range of the armature with an almost closed valve element, in which range the hydraulic damper is active, may make up between 5 and 20 per cent of the entire stroke of the armature between a state with a closed valve element and a state with an open valve element. Thus, over the remaining 80 to 95 per cent of the stroke, the reaction time of the solenoid valve is not influenced by the hydraulic damper.

According to the invention, the valve element is a ball. The damper also functions in other designs, for example if the valve element is formed in one piece with the plunger or the armature.

The invention also provides a pump unit for providing a hydraulic pressure for operating an actuator in the drivetrain of a motor vehicle, wherein at least one solenoid valve of the type discussed above is used. Such a pump unit makes it possible for example for a clutch actuator to be regulated with short reaction times in a very precise manner without the risk of vibrations of the valve element occurring. With regard to the resulting other advantages, reference is made to the above discussions.

The invention will be described below on the basis of various embodiments, which are illustrated in the appended drawings. In the drawings:
- Figure 1 schematically shows a pump assembly with solenoid valves;
- Figure 2 shows, in a section, a solenoid valve which can be used in the pump assembly in Figure 1;
- Figure 3 shows, in a section, a solenoid valve according to a first embodiment of the invention;
- Figure 4 shows the detail IV in Figure 3 on an enlarged scale;
- Figure 5 shows, in a section, a solenoid valve according to a second embodiment of the invention; an
- Figure 6 shows the detail VI in Figure 5 on an enlarged scale.

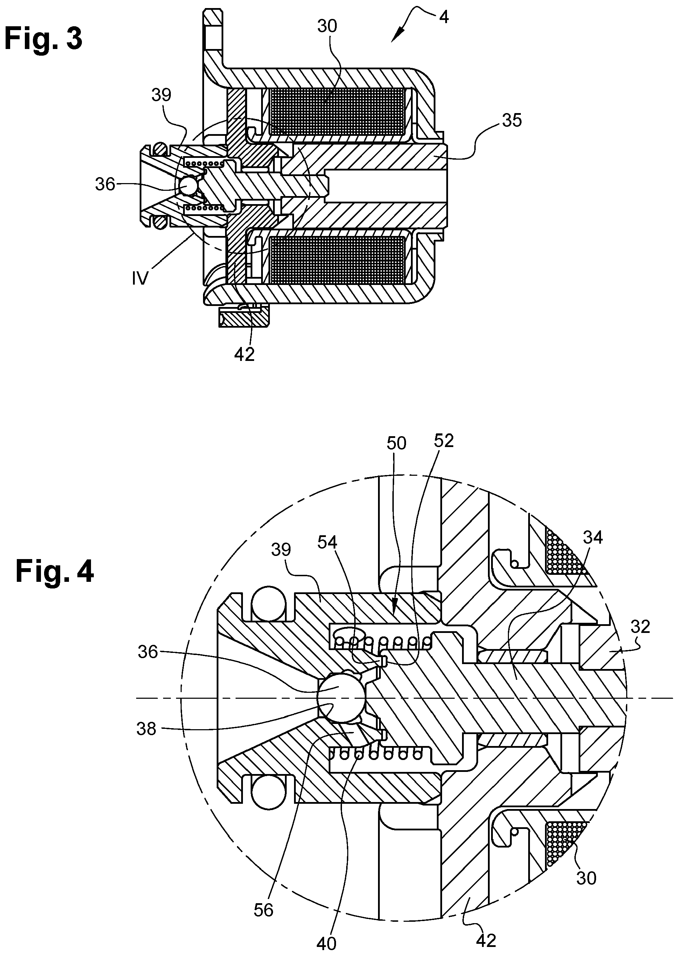

A solenoid valve according to a first embodiment of the invention will be explained below on the basis of Figures 3 and 4. The same reference signs are used for the components known from Figures 1 and 2, and, in this respect, reference is made to the explanations above.

In the first embodiment, use is made of a hydraulic damper 50 which serves to dampen the movement of the armature only over a very small range of its stroke, specifically in a range with an almost closed valve element 36 or a completely closed valve element 36.

In the first embodiment, the hydraulic damper 50 has a damping chamber 52 which a piston 54 can enter.

The damping chamber 52 is formed on the plunger 34, specifically on the front face side of the latter, that is to say the face side which faces towards the valve element 36 and the bushing 39. Here, the damping chamber 52 is of annular form and is centred on the central axis of the plunger 34.

The piston 54 is formed on the bushing 39 and is likewise centred on the central axis of the plunger 34 and of the valve seat 38 too.

Figure 4 shows the solenoid valve 4 in a closed state. The entry of the piston 54 into the damping chamber 52 can be seen. In this case, an annular gap (not visible in Figure 4) is present between the side walls of the piston 54 and the side walls of the damping chamber 52. This overflow gap has a width of the order of 0.05 to 0.1 millimetre.

Here, the restoring spring 40 is active between the bushing 39 and the plunger 34. It therefore also surrounds the hydraulic damper 50.

Multiple throughflow channels 56 are formed in that region of the bushing 39 which bears the piston 54, so that, when the valve element 36 is open, the hydraulic fluid can flow away without being hindered by the piston 54.

When the solenoid valve 4 is open completely or to a very great extent, that is to say when, based on Figure 4, the plunger 34 has been displaced to the right relative to the closed position, the plunger 34 can be displaced through electrical energization of the coil 30 without the hydraulic damper 50 being active. Only over the last part of the closing stroke is the damping chamber 52 pushed onto the piston 54, so that the hydraulic fluid situated therein has to flow through the overflow gap between the piston 54 and the walls of the damping chamber 52. This results in damping action which reduces the displacement speed of the plunger 34. Accordingly, vibrations of the valve element 36 are prevented too.

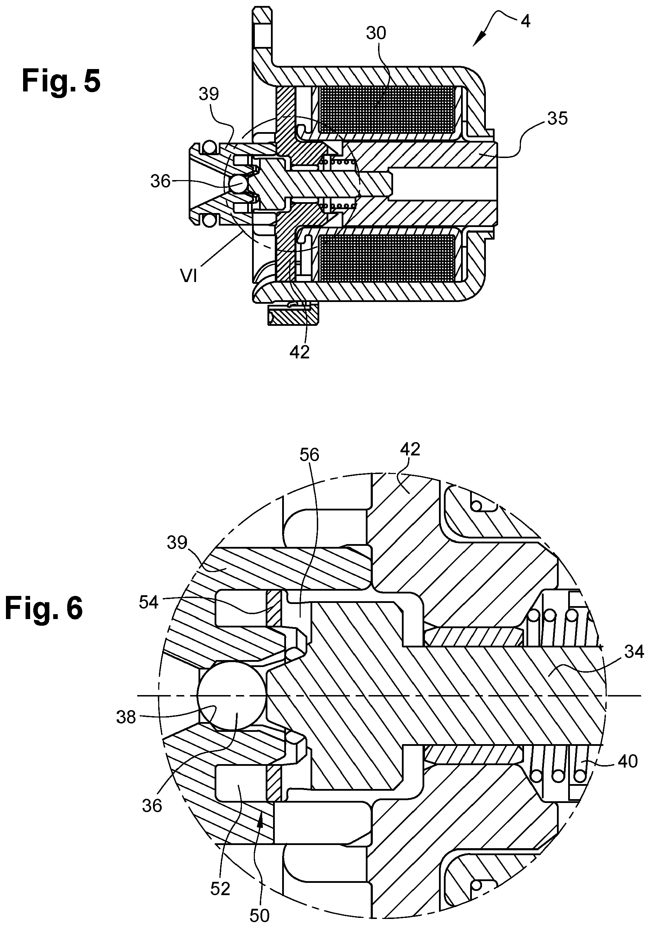

Figures 5 and 6 show a second embodiment. The same reference signs are used for the components known from the first embodiment, and, in this respect, reference is made to the explanations above.

The difference between the first and second embodiments is that, in the second embodiment, the damping chamber 52 is arranged so as to be fixed, while the piston 54 is formed on the plunger 34.

Specifically, the damping chamber 52 is formed in the bushing between the part which guides the valve element 36 and an outer wall. The piston 54 is formed in one piece with the plunger 34. Multiple throughflow channels 56 are provided between the piston 54 and the plunger 34.

A further difference between the first and second embodiments is that the restoring spring 40, here, is situated behind the bearing bracket 42, that is to say acts between the bearing bracket 42 and the plunger 34.

In the second embodiment, too, the hydraulic damper 50 is active only over the last part of the stroke of the plunger 34, that is to say when the armature 35 has been displaced almost completely into the closed position of the solenoid valve 4.

A particular advantage of the hydraulic damper 50 of the two embodiments is that the components forming the hydraulic damper 50, that is to say the damping chamber 52 and the piston 54, are formed without interposed components, which would lengthen the tolerance chains. One of the components (the damping chamber 52, in the first embodiment, and the piston 54, in the second embodiment) is formed in one piece with the plunger 34, which acts on the valve element 36, and the other component (the piston 54, in the first embodiment, and the damping chamber 52, in the second embodiment) is formed in one piece with the bushing 39, in which the valve seat 38 is formed too.

Even though the valve element is in the form of a ball in the embodiments shown, the damper according to the invention also functions in other designs, for example if the valve element is formed in one piece with the plunger or the armature.

## Claims

1. Solenoid valve (4) with a coil (30), with an armature (32), with a valve seat (38), and with a valve element (36) which can be forced against the valve seat (38) by the armature (32), **characterized in that** provision is made of a hydraulic damper (50) which is active only in a stroke range of the armature (35) with an almost closed valve element (36).

2. Solenoid valve according to Claim 1, **characterized in that** the hydraulic damper (50) has a damping chamber (52) and a piston (54) which are moved relative to one another when the armature (35) is displaced.

3. Solenoid valve according to Claim 2, **characterized in that** an overflow gap is provided between the piston (54) and the wall of the damping chamber (52) and has a width of the order of 0.05 to 0.1 mm.

4. Solenoid valve according to one of the preceding claims, **characterized in that** the damping chamber (52) is arranged on the armature (35) and the piston (54) is arranged so as to be fixed.

5. Solenoid valve according to Claim 4, **characterized in that** the damping chamber (52) is an annular groove on the armature (35).

6. Solenoid valve according to Claim 5, **characterized in that** the piston (54) is in the form of an annular piston on a bushing (39) on which the valve seat (38) is also arranged.

7. Solenoid valve according to Claim 6, **characterized in that** provision is made of a restoring spring (40) which is active between the armature (35) and the bushing (39).

8. Solenoid valve according to one of Claims 1 to 3, **characterized in that** the damping chamber (52) is arranged so as to be fixed and the piston (54) is arranged on the armature (35).

9. Solenoid valve according to Claim 8, **characterized in that** the damping chamber (52) is formed in a bushing (39) on which the valve seat (38) is also arranged.

10. Solenoid valve according to either of Claims 8 and 9, **characterized in that** multiple throughflow channels (56) are provided between the piston (54) and the armature (35).

11. Solenoid valve according to one of Claims 8 to 10, **characterized in that** provision is made of a restoring spring (40) which is active between the armature (35) and a bearing bracket (42) of the solenoid valve (4).

12. Solenoid valve according to one of the preceding claims, **characterized in that** the armature (35) is formed in two parts with an armature part (32), which projects into the coil (30), and a plunger (34), which interacts with the valve element (36), wherein a part of the hydraulic damper (50) is formed on the plunger (34).

13. Solenoid valve according to one of the preceding claims, **characterized in that** the stroke range of the armature (35) with an almost closed valve element (36) makes up between 5% and 20% of the entire stroke of the armature (35) between a state with a closed valve element (36) and a state with an open valve element (36).

14. Solenoid valve according to one of the preceding claims, **characterized in that** the valve element (36) is a ball.

15. Pump unit for providing a hydraulic pressure for operating an actuator in the drivetrain of a motor vehicle, in particular an actuator for operating a clutch or a transmission, with a pump (2), with a reservoir (6) for hydraulic fluid, and with at least one solenoid valve (4) according to one of the preceding claims.
